Europäisches Patentamt

European Patent Office

Office européen des brevets

(19)

(11) Numéro de publication: **0 177 387**
**B1**

(12)

# FASCICULE DE BREVET EUROPEEN

(45) Date de publication du fascicule du brevet:
**19.12.90**

(21) Numéro de dépôt: **85401697.9**

(22) Date de dépôt: **29.08.85**

(51) Int. Cl.⁵: **G01J 3/42**, G02B 26/02,
G01N 21/25, G02B 6/36

(54) **Equipement d'émission et de distribution de lumière par fibres optiques, notamment pour le contrôle spectrophotométrique en ligne à l'aide d'un spectrophotomètre double faisceau.**

(30) Priorité: **04.09.84 FR 8413611**

(43) Date de publication de la demande:
**09.04.86 Bulletin 86/15**

(45) Mention de la délivrance du brevet:
**19.12.90 Bulletin 90/51**

(84) Etats contractants désignés:
**BE CH DE GB IT LI NL SE**

(56) Documents cités:
**EP-A- 0 015 170**
**EP-A- 0 062 160**
**EP-A- 0 078 882**
**EP-A- 0 109 536**
**FR-A- 2 339 166**

**PATENTS ABSTRACTS OF JAPAN,**
**vol. 6, no. 70 (P-113)[948], 6 mai 1982; & JP-A-57 11 302**
**PATENTS ABSTRACTS OF JAPAN,**
**vol. 4, no. 134 (P-28)[616], 19 septembre 1980; &**
**JP-A-55 84 903**
**PATENTS ABSTRACTS OF JAPAN,**
**vol. 8, no. 55 (P-260)[1492], 13 mars 1984; &**
**JP-A-58 204 343**

(73) Titulaire: **COMMISSARIAT A L'ENERGIE ATOMIQUE Etablissement de Caractère Scientifique Technique et Industriel, 31/33, rue de la Fédération, F-75015 Paris(FR)**

(72) Inventeur: **Boisde, Gilbert, 30, rue Charles de Gaulle, F-91440 Bures sur Yvette(FR)**
Inventeur: **Quanquin, Michel, 5, rue Saint Pol Roux, F-78280 Guyancourt(FR)**

(74) Mandataire: **Mongrédien, André et al, c/o BREVATOME 25, rue de Ponthieu, F-75008 Paris(FR)**

ACTORUM AG

## Description

La présente invention a pour objet un équipement d'émission et de distribution de lumière par fibres optiques, notamment pour le contrôle spectrophotométrique en ligne à l'aide d'un spectrophotomètre à double faisceau.

De façon plus précise, l'invention concerne un dispositif permettant, par exemple, de déterminer la teneur d'une solution en un certain nombre de corps par une analyse spectrophotométrique à distance, les échantillons à analyser ne se trouvant pas dans le compartiment échantillon du spectrophotomètre. C'est par exemple le cas lorsque la solution à analyser est radioactive et que la cellule contenant cette solution doit être placée à l'intérieur d'une enceinte de protection, ou dans les commandes de processus industriels à distance.

Parmi les méthodes de mesure des espèces chimiques dans les solutions ou les gaz, l'analyse spectrophotométrique est utilisée couramment dans les laboratoires. Elle consiste, conformément à la loi de Beer-Lambert, à mesurer l'absorption de la lumière qui est liée, à une longueur d'onde déterminée, avec la concentration de l'espèce à doser.

En usine, dans les milieux d'accès difficiles et plus particulièrement dans les installations de chimie nucléaire, cette méthode d'analyse est devenue théoriquement utilisable en ligne, sans transfert d'échantillons au laboratoire, grâce à l'avènement sur le marché des fibres optiques qui permettent le transfert de l'information sous forme lumineuse depuis une cellule de mesure jusqu'à un spectrophotomètre qui peut être, selon les cas, situé à plus ou moins grande distance de la (ou des) cellule(s) de mesure.

L'emploi de fibres optiques reliant la sonde ou cuve de mesure placée "in-situ" dans un procédé à l'analyseur photométrique représente donc un progrès déterminant qui entraîne la banalisation d'appareils réputés fragiles dans un environnement industriel agressif pour causes de corrosion chimique, de déflagrance ou de radioactivité.

Pour mettre en oeuvre cette technique à base de fibres optiques, on peut, soit utiliser des photomètres spécialement conçus pour la mesure à distance tels que ceux qui sont commercialisés par la firme Hermann-Moritz sous les marques déposées TELE-PHOT et CRUDMETER, soit équiper des spectrophotomètres commerciaux, couramment employés en laboratoire, d'un dispositif additionnel tel que décrit dans le brevet européen n° 0015170 délivré le 22 juin 1983.

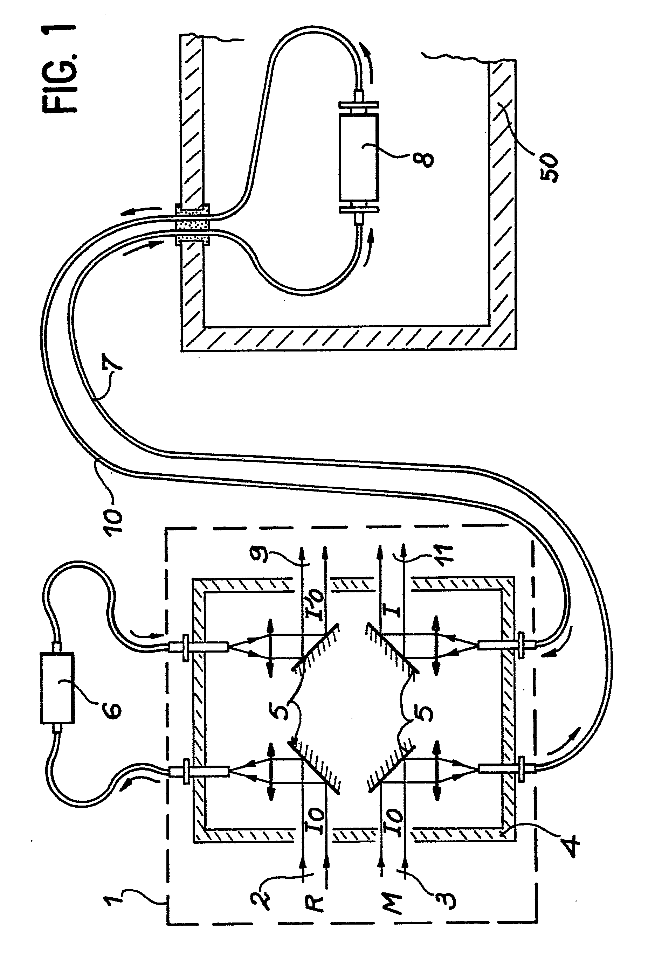

Un tel dispositif connu est décrit schématiquement en se référant à la figure 1. Sur cette figure, on a représenté le cas d'un spectrophotomètre avec un compartiment d'échantillon 1 à deux faisceaux respectivement référencés R pour le faisceau ou voie de référence et M pour le faisceau ou voie de mesure. Les entrées de la lumière d'intensi-té lo en provenance du monochromateur ont lieu en 2 et 3 dans le compartiment 4 d'insertion du coupleur optique. Un système 5 de miroirs à 45° permet d'envoyer cette lumière à la fois vers la cuve optique de référence 6 et, au travers de la fibre 7, vers la cellule de mesure 8. La cuve 6 comporte un échantillon témoin permettant de tenir compte de la turbidité des solutions analysées, c'est- à-dire de tous les facteurs extérieurs au corps à analyser qui sont susceptibles d'influer sur le coefficient d'absorption de la solution étudiée. La lumière d'intensité l'o sortant de la cuve optique de référence 6 est renvoyée par les miroirs 5 à la sortie 9 vers le détecteur non représenté. La lumière d'intensité I sortant de la cellule de mesure 8 est renvoyée au travers de la fibre optique 10 et des miroirs 5 à la sortie 11 vers ce même détecteur.

La cellule de mesure 8 est située par exemple dans une enceinte de protection 50 la protégeant de l'extérieur. Cette cellule de mesure 8 appartient au dispositif de contrôle d'un procédé industriel dont on veut surveiller l'évolution en permanence. La comparaison des intensités lo, l'o et I permet de connaître l'absorption lumineuse dans la cellule de mesure 8 due à la seule présence du corps à analyser et par conséquent permet le dosage de ce corps.

Un dispositif connu tel que rappelé sur la figure 1 possède néanmoins un certain nombre d'inconvénients spécifiques que nous examinerons maintenant.

Pour ce faire, on commencera par rappeler quelques données générales connues sur les caractéristiques des fibres optiques.

La transmission d'une fibre optique varie avec la longueur d'onde et selon sa composition (verre, plastique, silice à saut ou gradient d'indice). Les meilleures performances de transmission sont actuellement obtenues avec les fibres de silice synthétiques, l'atténuation mesurée à 0,85 μ de longueur d'onde étant de l'ordre du décibel par Km (dB/Km).

En choisissant des fibres optiques de caractéristiques déterminées, on peut donc maintenant envisager d'effectuer des mesures photométriques à plusieurs centaines de mètres de distance, mais sans supprimer néanmoins la perte d'énergie lumineuse importante apportée par un dispositif comme celui de la figure 1.

En effet, outre la perte de transmission due à la fibre elle-même, il existe d'autres causes de perte d'énergie lumineuse qui interviennent au niveau des jonctions des fibres (notamment dans les lentilles de collimation et aussi lors des réflexions à l'entrée des fibres).

Ainsi, quand on additionne les pertes dues à l'adjonction des fibres (10 dB), aux connecteurs et passages de cloison (10 dB) et à la cuve de mesure (5 dB), l'atténuation apportée par un dispositif de couplage d'un photomètre par fibres optiques peut at-teindre alors 25 dB. Convertie en unités d'absorption, cette perte de 25 dB représente une absorption optique de 2,5 unités d'absorbance alors que les spectrophotomètres commerciaux usuels permettent des mesures dans la gamme de 2 à 4 unités d'absorbance, c'est-à-dire avec une intensité de faisceau de $10^{-2}$ à $10^{-4}$ de celle de la lumière incidente. Il en découle donc une limitation d'emploi puisqu'il faut déduire de la dynamique d'échelle de l'appareil la perte apportée par le dispositif de couplage. Cet inconvénient est particulièrement sensible dans le cas d'un dispositif comme celui de la figure 1, dont la seule source d'énergie lumineuse est la source interne du spectrophotomètre, conçue à l'origine pour une mesure dans le compartiment échantillon 1 lui-même de l'appareil.

Un autre problème propre au contrôle en ligne industriel doit également être mentionné. Un dispositif du genre de celui de la figure 1 ne permet que la surveillance d'un seul point d'une installation à l'aide du spectrophotomètre 1. Or, il existe dans l'industrie de nombreux cas où un processus de fabrication d'un produit par exemple nécessite une série de contrôles en plusieurs points successifs de l'élaboration de ce produit et dans ce cas il faudrait, si l'on transpose l'appareil de la figure 1 à une réalisation de ce genre, autant de spectrophotomètres que de cellules de mesure. Un tel équipement qui serait évidemment théoriquement possible conduit à un ensemble lourd, coûteux, et il est évidemment préférable, ne serait-ce que pour des raisons économiques, d'avoir un seul analyseur spectrophotométrique capable d'exploiter les différents postes de mesure souhaitables.

Enfin, le dernier problème posé par l'emploi en contrôle en ligne industriel de ces spectrophotomètres, non conçus pour cet usage, est celui de la durée de vie de la (ou des) source(s) lumineuse(s) incorporée(s) à l'appareil.

Ces sources qui émettent, soit dans l'ultraviolet (source deutérium), soit dans le visible et le proche infrarouge (source quartz-iode), ont des longévités variables qui vont de 50 à 2000 heures selon leurs caractéristiques.

Une telle durée de vie ne présente pas d'inconvénient majeur en utilisation classique au laboratoire, puisqu'il suffit, en cas de besoin, de changer la lampe défaillante ; il en est tout autrement en usine, en contrôle continu, ou l'interruption de la mesure n'est parfois pas admissible pour raisons de sécurité.

La présente invention a précisément pour objet un équipement d'émission et de distribution de lumière par fibres optiques qui permet de s'affranchir des inconvénients précédemment rappelés et d'obtenir par des moyens simples une restauration de la dynamique d'échelle complète du spectrophotomètre utilisé, une surveillance continue de plusieurs cellules de mesure à l'aide d'un seul appareil et la possibilité de provoquer instantanément le remplacement d'une source lumineuse défaillante.

Cet équipement pour le contrôle spectrophotométrique en ligne à l'aide d'un spectrophotomètre à double faisceau, à savoir une voie pour la référence et une voie pour la mesure, du genre de ceux qui comprennent de façon connue une source lumineuse émettrice interne, un monochromateur, un compartiment à cuves optiques et un détecteur de lumière, se caractérise en ce qu'il comporte au moins une source lumineuse complémentaire émettant à travers un réseau de fibres optiques en permanence vers une cellule de référence et séquentiellement, vers l'une des n cellules de mesure correspondant aux contrôles à effectuer, les informations lumineuses provenant de la cellule de référence d'une part et, séquentiellement, de chacune des n cellules de mesure d'autre part étant acheminées par le réseau de fibres optiques respectivement vers la voie de référence et vers la voie de mesure du spectrophotomètre.

Comme on le voit, l'adjonction au spectrophotomètre du commerce utilisé, d'une source lumineuse complémentaire extérieure, fonctionnant à la place de la précédente, permet d'ajuster l'énergie lumineuse aux besoins et de faire travailler à distance le spectrophotomètre du commerce dans des conditions d'atténuation lumineuse équivalentes à celles prévues lorsque l'analyse était effectuée au sein même de l'appareil dans le compartiment échantillon. Par ailleurs, les dispositifs d'aiguillage séquentiel de la lumière vers chacune des cellules de mesure, puis vers la voie de mesure du spectrophotomètre, permettent d'effectuer une surveillance en n points d'un processus industriel à l'aide d'un spectrophotomètre unique.

Selon un mode de réalisation préféré de l'invention, la liaison entre la source et le réseau de fibres optiques est réalisée à l'aide d'un système rotatif du type à barillet dans lequel une ampoule électrique émet dans une première direction vers une sortie fixe constituant la voie de référence et, dans la direction opposée, au travers d'un ensemble de deux miroirs à 45° mus en rotation par un moteur pas à pas, séquentiellement vers l'une des n sorties alimentant chacune l'une des n cellules de mesure.

Ce système d'aiguillage à barillet mû par un moteur pas à pas est particulièrement simple et permet le balayage séquentiel précédent avec une sûreté et une régularité parfaites. Par ailleurs, le fait qu'il possède une sortie fixe pour la voie de référence permet d'éclairer celle-ci en permanence sans autre intermédiaire que la cuve optique de référence correspondante.

Selon une caractéristique intéressante de la présente invention, l'adressage séquentiel des informations lumineuses en provenance des n cellules de mesure vers la voie de mesure unique du spectrophotomètre est réalisé à l'aide d'un second système rotatif du type à barillet, dépourvu de source lumineuse et couplé en rotation au premier système, les sens de parcours de la lumière étant opposés dans chacun des deux systèmes.

Le second système à barillet dépourvu de source lumineuse est donc utilisé comme adresseur de faisceau vers la voie de mesure du spectrophotomètre et comme il est mécaniquement couplé au moteur pas à pas qui assure la rotation du premier système à barillet, on est ainsi assuré de la continuité de chaque voie optique entre la source lumineuse et la voie de mesure du spectrophotomètre au travers, successivement, de chacune des cellules de mesure.

Enfin, selon un perfectionnement important de la présente invention, l'ensemble précédent comporte deux systèmes rotatifs à barillet identiques et munis d'une source émettrice, dont chacun peut être substitué à l'autre en cas de défaillance d'une source lumineuse, par l'intermédiaire de n+1 aiguilleurs de faisceau à trois voies, commandant chacun l'adressage de la lumière circulant sur l'une des n+1 voies que sont la voie de référence et les n voies de mesure.

Les deux systèmes à barillet identiques dont chacun comporte une source lumineuse, pouvant être substitués l'un à l'autre en cas de défaillance de la source en cours d'utilisation, on est assuré qu'il n'y a pas d'interruption dans les mesures et une source lumineuse défaillante peut être changée dans ces conditions en toute tranquillité après le basculement du dispositif d'un système rotatif vers l'autre.

De toute façon l'invention sera mieux comprise en se référant à la description qui suit de plusieurs exemples de réalisation, qui sont donnés surtout à titre explicatif et non limitatif, en se référant aux figures 2 à 6 sur lesquelles :

- la figure 2 représente en coupe selon l'axe un système rotatif du type à barillet muni de son ampoule électrique ;
- la figure 3 représente un schéma de surveillance à distance de sept postes de mesure avec une cellule de référence, l'ensemble étant éclairé à l'aide de deux systèmes rotatifs à barillet montés mécaniquement sur le même axe et donc solidaires en rotation ;
- la figure 4 représente une variante du dispositif précédent dans lequel deux systèmes rotatifs à barillet identiques, comportant chacun sa source lumineuse, sont montés en parallèle ;
- la figure 5 représente le schéma de réalisation possible de l'un des aiguilleurs de faisceau de la figure 4 représenté en coupe dans le plan des jonctions optiques ;
- la figure 6 représente le même aiguilleur de faisceau en coupe selon AA de la figure 5.

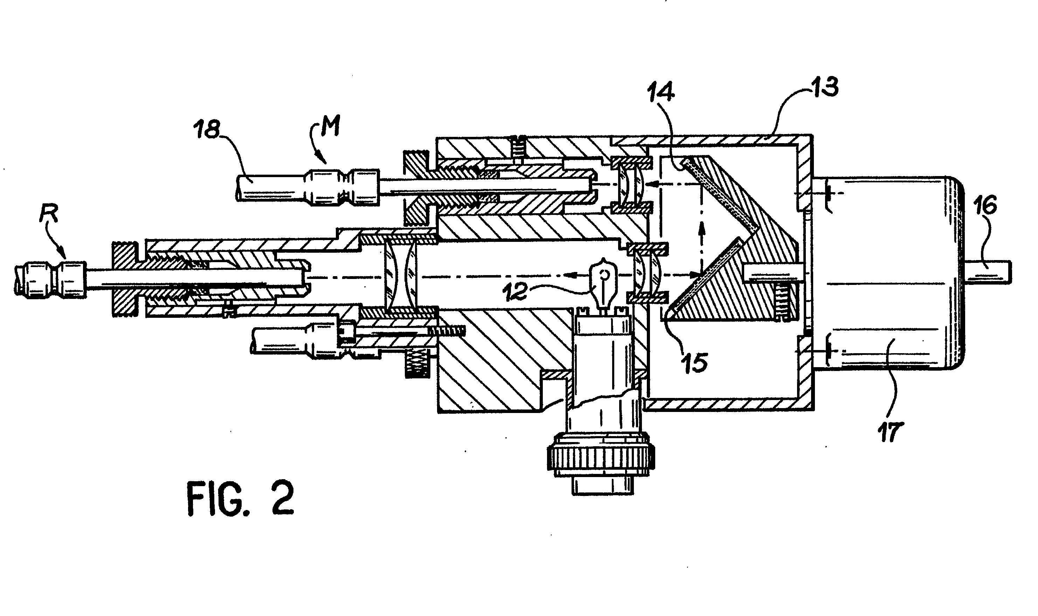

Sur la figure 2, on voit la source lumineuse 12 située dans un boîtier 13 et éclairant dans deux directions opposées d'une part la voie de référence R fixe et, d'autre part, au travers d'un système de miroirs à 45°, 14 et 15, montés rotatifs autour de l'axe 16 du moteur pas à pas 17, l'une des n voies de mesure M disposée circonférentiellement autour de l'axe du système. Sur la figure 2, seule la voie 18 est visible, mais l'on doit bien entendu supposer que le dispositif comporte ainsi n voies de sortie de la lumière réparties circonférentiellement à la périphérie du dispositif à la manière d'un barillet. C'est donc le dispositif représenté sur la figure 2 qui constitue la source lumineuse auxiliaire externe permettant de renforcer le flux lumineux dans les fibres optiques et d'amener à la cuve de mesure du spectrophotomètre un niveau de lumière incidente identique à celui prévu pour les conditions d'utilisation, sur place, c'est-à-dire sans raccord du spectrophotomètre à un système de fibres optiques allant capter des informations à distance. La source lumineuse représentée par l'ampoule électrique 12 peut émettre dans l'ultraviolet, le visible ou l'infrarouge et elle peut être du type quartz-iode pour le rayonnement visible ou proche infrarouge, ou du type deutérium pour le rayonnement ultraviolet. Bien entendu, ces exemples ne sont pas limitatifs.

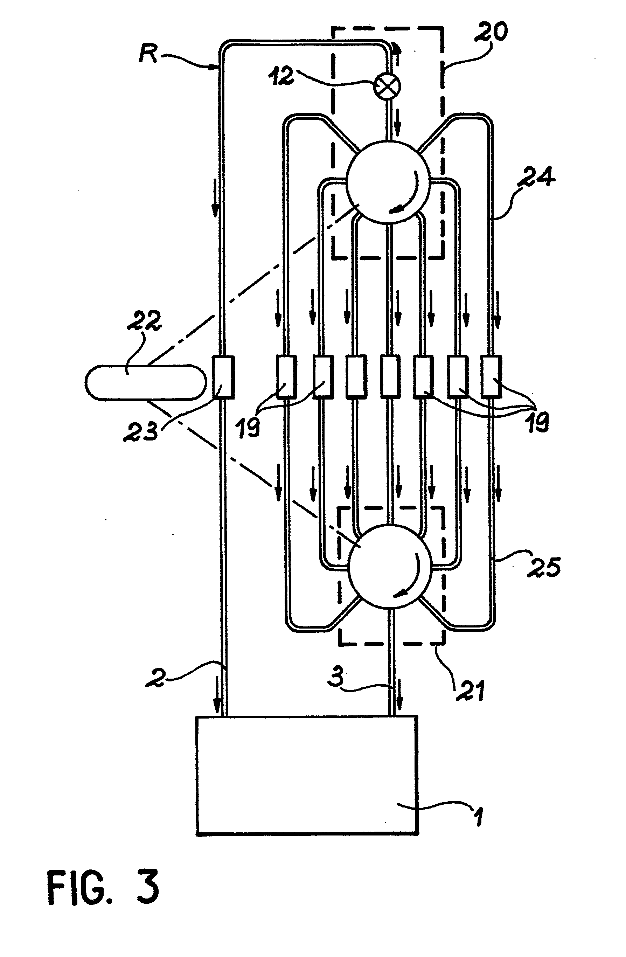

Le dispositif de la figure 3 illustre la possibilité à l'aide d'un spectrophotomètre courant du commerce référencé 1 de surveiller sept cellules de mesure 19 de façon séquentielle à l'aide de deux sys tèmes rotatifs du type à barillet conforme à celui de la figure 2, dont le premier référencé 20 comporte une source lumineuse 12 et dont le second référencé 21 ne comporte pas de source lumineuse. Les deux systèmes rotatifs à barillet 20 et 21 sont montés dos à dos sur le même axe de rotation et sont ainsi couplés mécaniquement en rotation par un dispositif schématisé en 22. La voie de référence R éclaire en permanence la cellule de référence 23 destinée au contrôle de turbidité et le système rotatif 20 aiguille la lumière successivement vers l'une des sept fibres optiques 24 conduisant chacune à l'une des sept cellules de mesure 19. En sortie de celles-ci, des fibres optiques 25 adressent la lumière vers le deuxième système rotatif 21, puis en sortie de celui-ci, sur la voie 3 de mesure du spectrophotomètre 1. Comme on le voit sur la figure 3, les deux systèmes rotatifs à barillet 20 et 21 couplés en rotation assurent séquentiellement la continuité lumineuse de l'une des sept voies de mesure entre la source émettrice 20 et la voie de mesure 3 du spectrophotomètre 1. Chacun des deux systèmes 20 et 21 est parcouru par la lumière selon des sens opposés, puisque les entrées de l'un correspondent exactement aux sorties de l'autre.

L'ensemble de la figure 3 réalise ainsi parfaitement la mesure continue de plusieurs postes dans un processus en ligne à distance à l'aide d'un spectrophotomètre unique ne comportant que deux voies, l'une pour la référence et l'autre pour la mesure. Par ailleurs, la présence de la source auxiliaire 12 externe au spectrophotomètre 1 assure la restauration totale de la dynamique d'échelle du spectrophotomètre du commerce 1.

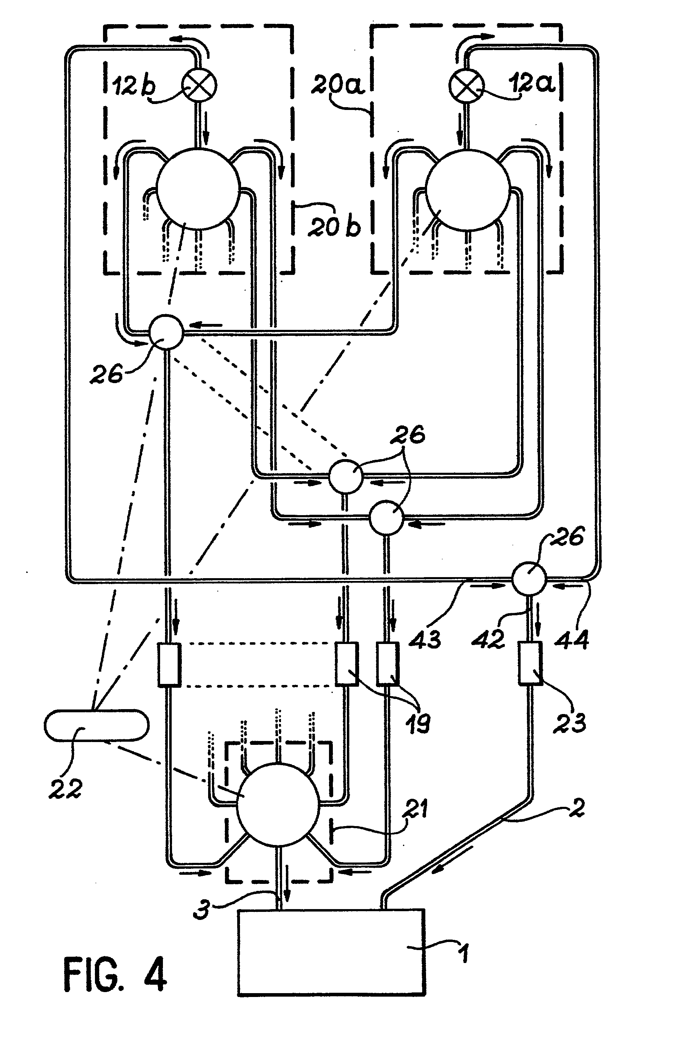

Dans l'ensemble de la figure 4, on résout le même problème et les éléments communs portent des nombres de référence identiques. Néanmoins, cet ensemble diffère du précédent en ce qu'il comporte deux systèmes rotatifs à barillet référencés 20a et 20b comportant chacun sa source lumineuse 12a et 12b. A chaque instant l'un des deux systèmes 20a ou 20b fonctionne seul grâce à l'emploi d'aiguilleurs de faisceaux à trois voies tels que 26. Ces aiguilleurs 26 acheminent à volonté la lumière de l'un des deux systèmes 20a ou 20b vers les cellules de mesure 19 et la cellule de référence 23. Un troisième système à barillet 21, non muni d'une source lumineuse mais couplé mécaniquement par le dispositif schématique 22 à l'un des deux systèmes 20a et 20b, recueille séquentiellement la lumière issue de l'une des sept cellules de mesure 19 et l'adresse sur la voie de mesure 3 du spectrophotomètre 1.

Des moyens mécaniques à la portée de l'homme de l'art et schématisés en 22 permettent de faire fonctionner l'une ou l'autre des sources 20a et 20b en synchronisme avec le système 21.

Le fonctionnement du dispositif de la figure 4 est évident et on conçoit qu'il suffit, dès que l'une des sources lumineuses 12a ou 12b s'avère défaillante, d'agir sur les aiguilleurs de faisceaux 26 pour basculer le dispositif sur celui des systèmes 20a et 20b qui est en fonctionnement. Cette surveillance et ce basculement peuvent être effectués automatiquement par une cellule photoélectrique qui surveille l'état de chaque source. Il suffit, ensuite lorsque l'une d'entre elles 12a ou 12b s'est révélée défaillante de la remplacer dans un temps raisonnable après l'incident.

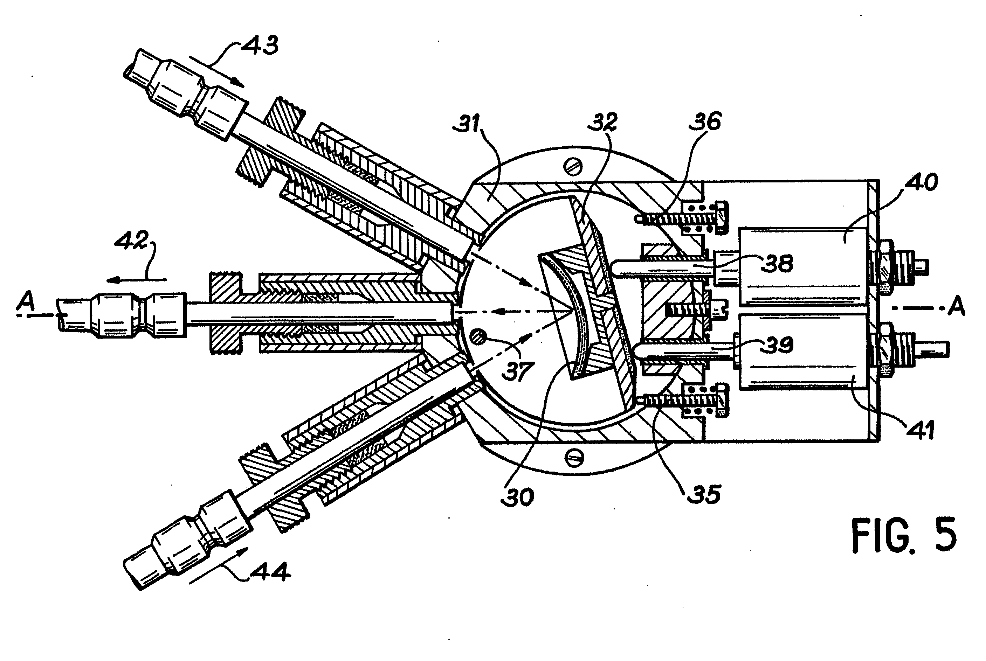

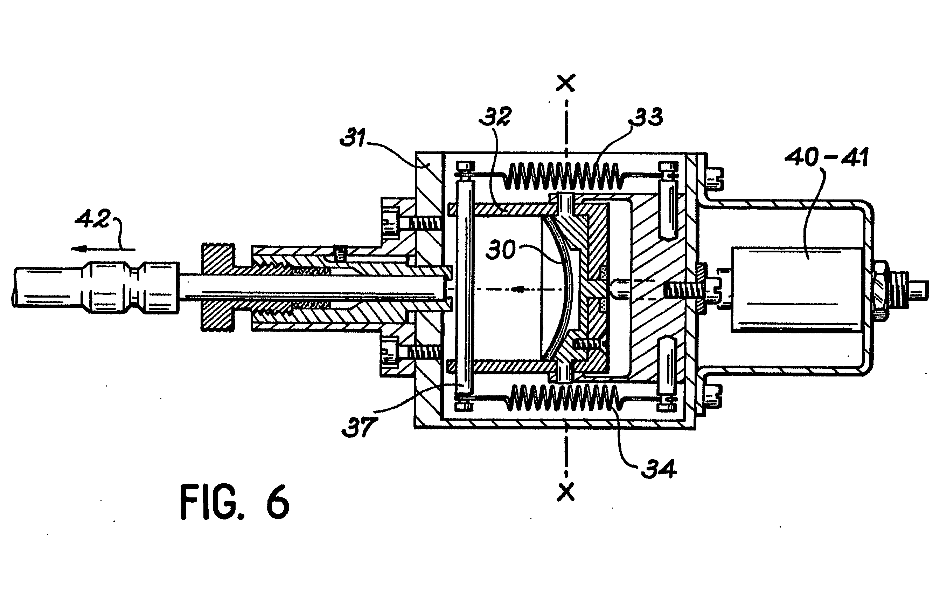

On décrira ensuite, de façon sommaire, la réalisation possible des aiguilleurs de faisceaux à trois voies 26 en se référant aux figures 5 et 6. Pour l'essentiel, ceux-ci comprennent un miroir concave réfléchissant 30 monté à l'intérieur d'un boîtier cylindrique 31 sur un ensemble 32 monté bistable autour de l'axe XX. Le basculement de l'ensemble pivotant 32 est assuré par les deux ressorts 33 et 34 et la course du basculement est limitée par des vis de butée 35 et 36 réglables. Le basculement de l'ensemble pivotant est assuré par la traction des ressorts 33 et 34 agissant sur la tige 37 liée à l'ensemble 32 et le déclenchement du basculement est commandé par deux doigts poussseurs 38 et 39 mus par deux poussoirs 40 et 41 qui peuvent être, soit de simples poussoirs à main, soit des vérins, soit des électroaimants ou tout autre dispositif analogue.

Par ailleurs, le boîtier 31 est relié à trois voies d'accès lumineuses, à savoir une voie 42 de départ de la lumière et deux voies 43 et 44 d'arrivée de celle-ci.

Le fonctionnement du dispositif des figures 5 et 6 est facile à comprendre et se résume en ceci : la lumière issue de la voie centrale 42 peut provenir, selon la position de l'ensemble pivotant bistable 32 et donc du miroir 30, soit de la voie d'entrée 43, soit de la voie d'entrée 44. On réalise donc ainsi à volonté un aiguilleur à trois directions comportant une direction de départ fixe, correspondant sur la figure 4 à celle des trois voies lumineuses qui est reliée aux cellules de mesure 19, et deux voies optionnelles susceptibles d'apporter la lumière provenant de la voie 43 ou de la voie 44. A titre indicatif, les références 42, 43 et 44 ont été reportées sur un seul des aiguilleurs de faisceaux 26 de la figure 4, mais ils sont bien entendu montés tous de la même façon.

On peut noter enfin que dans une variante d'application de la figure 4, il peut être utile d'avoir non pas deux sources 12a et 12b absolument identiques mais par exemple l'une émettant dans l'ultraviolet et l'autre émettant dans le visible proche de l'infrarouge. Le système décrit en se référant à la figure 4 permet sans modification de réaliser un tel équipement.

L'équipement d'émission et de distribution de lumière par fibres optiques objet de l'invention s'applique à tout spectrophotomètre du commerce, surtout à double faisceau, dès lors qu'il renferme une source lumineuse émettrice, un monochromateur de lumière à prismes à réseaux ou à filtres, un compartiment à cuves optiques et un détecteur de lumière et son électronique associée.

Les mesures effectuées à l'aide d'un équipement selon l'invention découlent de la loi de Beer- Lambert et permettent de mesurer la concentration d'un produit puisque cette concentration est fonction du logarithme du rapport des intensités lumineuses Io et I mesurées avant et après la traversée de chacune des cuves optiques des différentes cellules de mesure.

L'équipement optique, qui vient d'être décrit en se référant à une installation spectrophotométrique, ne doit pas être considéré comme limité à cette application. Il trouverait d'autres applications, également très intéressantes, dans toutes sortes de mesures à distance par fibres optiques et notamment, par exemple, dans des mesures de pressions, de températures ou de pH, dès lors que l'on veut surveiller séquentiellement plusieurs postes à l'aide d'un seul détecteur.

**Revendications**

1. Equipement d'émission et de distribution de lumière par fibres optiques destiné à être utilisé avec un spectrophotomètre (1) à double faisceau, à savoir une voie pour la référence (R) et une voie pour la mesure (M), comprenant de façon connue un compartiment à cuves optiques et un détecteur de lumière, caractérisé en ce que ledit équipement comporte au moins une source lumineuse (12) externe au spectro-photomètre émettant à travers un réseau de fibres optiques (24, 25) en permanence vers une cellule de référence (23) et, séquentiellement, vers une des n cellules de mesure (19) correspondant aux contrôles à effectuer, les informations lumineuses provenant de la cellule de référence (23) d'une part et, séquentiellement, de chacune des n cellules de mesure (19) d'autre part étant acheminées par le réseau de fibres optiques respectivement vers la voie de référence (2) et vers la voie de mesure (3) du spectrophotomètre (1).

2. Equipement selon la revendication 1, caractérisé en ce que la liaison entre la source (12) et le réseau de fibres optiques est réalisée à l'aide d'un système rotatif du type à barillet (20) dans lequel une ampoule électrique (12) émet dans une première direction vers une sortie fixe constituant la voie de référence et, dans la direction opposée, au travers d'un ensemble (5) de deux miroirs à 45° (14,15) mus en rotation par un moteur pas à pas (17), séquentiellement, vers l'une des n sorties alimentant chacune l'une des n cellules de mesure (19).

3. Equipement selon la revendication 2, caractérisé en ce que l'adressage séquentiel des informations lumineuses en provenance des n cellules de mesure (19) vers la voie de mesure unique (3) du spectrophotomètre (1) est réalisé à l'aide d'un second système rotatif du type à barillet (21), dépourvu de source lumineuse et couplé en rotation au premier système (20), les sens de parcours de la lumière étant opposés dans chacun des deux systèmes (20, 21).

4. Ensemble selon la revendication 2, caractérisé en ce qu'il comporte deux systèmes rotatifs à barillet identiques (20a, 20b) et munis d'une source émettrice (12a, 12b), dont chacun peut être substitué à l'autre en cas de défaillance d'une ampoule électrique, par l'intermédiaire de n+1 aiguilleurs de faisceaux à trois voies (26), commandant chacun l'adressage de la lumière circulant sur l'une des n+1 voies que sont la voie de référence et les n voies de mesure.

## Claims

1. Equipment for the emission and distribution of light by optical fibres, for use with a double beam spectrophotometer (1), namely one channel for the reference (R) and one channel for the measurement (M), of the type comprising in per se known manner, a compartment having optical probes and a light detector, characterized in that said equipment has at least one complementary light source (12) outside the spectrophotometer emitting through a system of optical fibres (24, 25) permanently towards a reference cell (23) and sequentially towards one of the n measuring cells (19) corresponding to the controls to be performed, the light information from the reference cell (23) on the one hand and sequentially form each of the n measuring cells on the other being passed by the system of optical fibres respectively to the reference channel (2) and to the measuring channel (3) of the spectrophotometer (1).

2. Equipment according to claim 1, characterized in that the connection between the source (12) and the system of optical fibres is brought about with the aid of a drum or barrel-type rotary system (20), in which an electric light bulb (12) emits in a first direction towards a fixed exit constituting the reference channel and in the opposite direction across a group (5) of two mirrors (14, 15) at 45° rotated by a stepping motor (17) sequentially towards one of the n exits supplying each of the n measuring cells (19).

3. Equipment according to claim 2, characterized in that the sequential addressing of the light information from the n measuring cells (19) to the single measuring channel (3) of the spectrophotometer (1) is carried out with the aid of a second drum or barrel-type rotary system (21), which does not have a light source and which is coupled in rotation with the first system (20), the light travelling in opposite directions in each of the two systems (20, 21).

4. Equipment according to claim 2, characterized in that it comprises two identical drum or barrel-type rotary systems (20a, 20b) provided with an emitting source (12), whereof each can be substituted for the other in the case of a failure of a light source, via n + 1 three-channel beam switching means (26), each controlling the addressing of the light circulating on one of the n + 1 channels formed by the reference channel and the n measuring channels.

## Patentansprüche

1. Anordnung zum Aussenden und Verteilen von Licht über optische Fasern, die dazu bestimmt ist, mit einem Doppelbündel-Spektrophotometer (1) mit zum Beispiel einer Referenzleitung (R) und einer Meßleitung (M) verwendet zu werden, und die in bekannter Weise einen Bereich für optische Behälter und einen Lichtdetektor umfaßt, dadurch gekennzeichnet, daß die Anordnung wenigstens eine Lichtquelle (12) außerhalb des Spektrophotometers umfaßt, die über ein Netzwerk aus optischen Fasern (24, 25) permanent auf eine Referenzzelle (23) und sequentiell auf eine der n Meßzellen (19), die den durchzuführenden Kontrollen entsprechen, strahlt, wobei die optischen Informationen zum einen Teil von der Referenzzelle (23) und zum anderen Teil sequentiell von jeder der n Meßzellen (19), die über das Netz aus optischen Fasern jeweils mit der Referenzleitung (2) und der Meßleitung (3) des Spektrophotometers (1) verbunden sind, kommen.

2. Anordnung nach Anspruch 1, dadurch gekennzeichnet, daß die Verbindung zwischen der Quelle (12) und dem Netz aus optischen Fasern mittels eines rotierenden Systems von der Art einer Trommel (20) hergestellt wird, in dem eine elektrische Glühbirne (12) in eine erste Richtung auf einen festen Ausgang, der die Referenzleitung darstellt, und sequentiell in die entgegengesetzte Richtung über eine Gruppe (5) von zwei Spiegeln unter 45°, die durch einen Schrittmotor in Bewegung gesetzt werden, auf einen der n Ausgänge strahlt, die jeweils eine der n Meßzellen versorgen.

3. Anordnung nach Anspruch 2, dadurch gekennzeichnet, daß die sequentielle Adressierung optischer Informationen aus den n Meßzellen (19) auf die einzige Meßleitung (3) des Spektrophotometers (1) mit Hilfe eines zweiten, rotierenden Systems der Art einer Trommel (21) durchgeführt wird, das nicht mit einer Lichtquelle versehen ist und in der Drehung mit dem ersten System (20) verbunden ist, wobei die Richtung des Lichtweges in jedem der beiden Systeme (20, 21) zueinander entgegengesetzt ist.

4. Anordnung nach Anspruch 2, dadurch gekennzeichnet, daß sie zwei rotierende Systeme mit identischen Trommeln (20a, 20b) mit einer emittierenden Quelle (12a, 12b) umfaßt, von denen jede durch die andere im Falle des Ausfalls einer elektrischen Glühbirne mit Hilfe von n + 1 Dreiwegeweichen (26), die jeweils die Adressierung des in einem der n + 1 Leiter, welches die Referenzleitung und die n Meßleitungen sind, zirkulierenden Lichts steuern, ersetzt werden kann.

FIG. 1

FIG. 2

EP 0 177 387 B1

FIG. 3

FIG. 4

FIG. 5

EP 0 177 387 B1

FIG. 6